# EUROPEAN PATENT SPECIFICATION

(11) **EP 0 381 073 B1**
(45) Date of publication and mention of the grant of the patent: **18.09.1996**
(21) Application number: 90101585.9
(22) Date of filing: 26.01.1990
(51) Int. Cl.: G05D 1/02, A01D 41/00

(54) **Automatic guidance apparatus for a vehicule**
Gerät zur automatischen Führung für ein Fahrzeug
Appareil de guidage automatique pour un véhicule

(30) Priority: 30.01.1989 US 302889; 20.03.1989 US 326475
(43) Date of publication of application: 08.08.1990
(73) Proprietor: EATON CORPORATION, Cleveland Ohio 44114 (US)
(72) Inventor: Schutten, Herman Peter, Bayside, Wisconsin 53217 (US); Stephenson, Dwight Bruce, Savage, Minnesota 55378 (US); Johnson, Oliver Wendell, Chaska, Minnesota 55318 (US)
(74) Representative: Schwan, Gerhard, Dipl.-Ing.

(56) References cited:
- GB-A- 2 071 978
- US-A- 3 991 618

## Description

### FIELD AND BACKGROUND OF THE INVENTION

### Field

The invention relates vehicles. It is illustrated here by a vehicle for the harvesting of crops that are planted in rows, such as corn and soybeans. A vehicle is steered automatically by sensing the locations of the rows of plants. Typically, corn is planted with a predetermined spacing of from 0.15 to 0.36 m (6 inches to 14 inches), in rows about 0.76 m (2-1/2 feet) apart. When the plants are harvested, the vehicle travels in a direction longitudinal of the rows of corn, automatically senses the lateral locations of the rows, and utilizes the information for fully-automatic steering or manually-assisted automatic steering.

### Background

Crop vehicles of this type commonly harvest twelve rows of plants simultaneously. As the vehicle moves forward the plants in the rows are guided by twelve V-shaped guides at the front of the vehicle. The V-shaped guides shepherd the flexible plants into stripping or cutting bars mounted on the crop vehicle, where the ears of corn are stripped from their stalks or the plants are severed. The V-shaped guides are typically about 1.52 m (five feet) long, and their forward tips are about 0.76 m (2-1/2 feet) apart. The front of at least one of the V-guides is equipped with a pair of plant-contact sensors. These feeler-type sensors are contacted by the corn plants as they enter the V-guide. The sensors provide electrical signals that assist in the steering of the crop vehicle.

A guidance system that automatically steers a vehicle to track rows of spaced-apart plants, comprising means for sensing the lateral locations of the rows relative to the vehicle and providing lateral information signals based thereon; steering command means receiving the lateral information signals and providing command signals for steering the vehicle to follow a course tracking the rows; and steering-actuator means receiving the command signals, and responsive thereto for steering the vehicle, is known from GB-A-2 071 978.

In this prior guidance system feelers are provided which are arranged in pairs, the feelers of each pair being deflectable in opposite directions and being coupled to inductive transmitters. The transmitters associated with the left sides of the rows are connected in parallel through respective diodes and the transmitters associated with the right sides of the rows are similarly connected in parallel through respective diodes, the two groups of transmitters being connected in series opposition. The control of the automatic steering system is derived from the difference of the individual voltages of all righthand transmitters and the individual voltages of all lefthand transmitters.

Furthermore a row-crop harvester adapted to travel along the ground in a transport direction and provided with four crop sensors is known from US-A-3 991 618. In this harvester one crop sensor is provided to one side and in front of the harvester and normally feels the edge of the crop in front of the harvester and generates an output that controls an automatic steering system which guides the harvester along this edge. Another sensor is provided at the back of the harvester on the other side from the front sensor and serves to feel the edge of the swath just cut. Another sensor in front of the cutter on the harvester detects a gap in the crop and serves to switch the automatic steering system over from the front sensor to the back sensor in case a gap appears in the crop so that the harvester will not swing back and forth to follow minor crop gaps. In addition another sensor is provided on the front of the harvester so that when it arrives at the end of the field the harvester is automatically stopped and can only be moved by manual takeover of the steering.

Another prior guidance system relies for steering purposes upon information as to which of two plant-contacting sensors (the right-hand sensor or the left-hand sensor), at the front of the same V-guide is deflected by the corn plants. This system, as well as the system mentioned before, can automatically assist the steering well enough to harvest corn satisfactorily from straight rows of plants, but is unable to steer automatically very accurately where the rows are curved. The reason that the vehicle does not automatically follow curved rows of plants very well is that a relatively large error (i.e., lateral offset of the vehicle from the optimum travel path) has to develop before a sufficient corrective steering command is produced. This cannot be corrected by merely designing the closed feedback loop with higher gain, because the system then becomes unstable. Even when the feedback loop has the maximum gain that is practical in that prior system the vehicle tracks very poorly around turns.

In such a prior art system the accuracy of steering around curves cannot be improved by merely providing an integral feedback term in the steering control system because there would be too much delay both in build-up of the integral bias to produce an adequate steering control signal and in reduction of the integral bias after the crop vehicle comes out of the turn. To improve its steering, the prior system being described employs a bias signal that is controlled manually. When the vehicle enters a turn the operator is required to turn a knob to add enough bias signal to keep the crop vehicle lined up with the rows of crop. Needless to say it is inconvenient for the operator to have to assist the automatic steering system in this way.

### SUMMARY

### Problem Solved By The Invention

As a guided harvesting vehicle drives along parallel to the crop rows it may get slightly off the optimum path (in which the V-guides would be centered laterally on the rows) and headed in a slightly incorrect direction. The problems of automatic guidance are (a) to sense the present locations of the rows relative to the vehicle and to anticipate the future locations; (b) to determine by algorithms the best direction for the steerable wheel at that moment to place the vehicle on the optimum path with the proper heading as quickly as possible; (c) to- supply control signals and an actuator to accomplish that steering; (d) to provide high-enough loop gain to keep the vehicle tracking the rows with only a small error at most; (e) to provide alarm outputs for the attention of the operator; and (f) to reduce the speed of the vehicle when the feedback error signal becomes excessive and resume it later.

### General Approach

The subject invention provides for a guidance system that automatically steers a vehicle to track rows of spaced-apart plants, comprising means for sensing the lateral locations of the rows relative to the vehicle and providing lateral information signals based thereon; steering command means receiving said lateral information signals and providing steering command signals for steering the vehicle to follow a course tracking said rows; and steering-actuator means receiving said command signals, and responsive thereto for steering the vehicle; the system being characterized by means contacting the plants for sensing the angular rate of turning of the vehicle by utilizing the different frequencies of detection of the rows of plants on the inside and outside of the curve, and for providing turning-rate feedback signals based thereon; said steering command means additionally receiving said turning-rate feedback signals and responsive to both said lateral information signals and said turning-rate feedback signals providing said steering command signals.

The guidance system described herein senses the geometry of the vehicle's situation, turns the wheels in the direction of the optimum path, and turns them back upon reaching or shortly before reaching the optimum path, as sharply as is appropriate to get on the optimum path.

The invention is embodied in a "plant-sensing" type of guidance system; the name refers to the means of sensing the location, speed, and rotation of the vehicle. The following brief overview of what the guidance system does applies to both straight and curved segments of the crop rows.
(a) It ascertains the lateral position of the vehicle relative to the crop rows by obtaining relative lateral-position data from plant sensors on two or more of its V-guides.
(b) It anticipates changes in the vehicle's near-future position relative to the rows by ascertaining the velocity and the rate of change of heading of the vehicle relative to the rows. This is accomplished by measuring the frequency of contacting plants, and the frequency difference of contacting plants of a left-hand row relative to a right-hand row, based upon information from the plant sensors on the left and right V-guides.

Preferably the guidance system of the subject invention also is designed such that:
(c) When the feedback error signal exceeds a predetermined threshold limit, the speed is automatically reduced, and the speed is restored when the excessive error subsides.
(d) The speed of the vehicle controls the gain of a portion of the feedback control loop, so that the loop gain can be held constant irrespective of variations introduced in another portion of the loop, or the loop gain can be varied in a desired manner as a function of vehicle speed.

### BRIEF DESCRIPTION OF THE DRAWINGS

- Fig. 1: is a simplified diagram of a crop vehicle as it approaches a turn in rows of plants that is harvesting.
- Fig. 2: is a simplified diagram of V-guides and contact sensors on a crop vehicle equipped with a preferred embodiment of the invention.
- Fig. 3: is a block diagram of major components and signal flow among them for automatic guidance of the crop vehicle.
- Fig. 4: is a block diagram of portions of electronic equipment for processing signals received from V-guide sensors for guidance of the crop vehicle while it is operating in a field. Speed control is not included.

FIG. 5 is a position-vs-time graph showing simulated performance of a guidance system as a crop vehicle goes around a curve, when the system has no curve-correction equipment.

FIG. 6 is a similar position-vs-time graph showing simulated performance on a curve of the invented system, which has curve-correction equipment.

FIG. 7 is a table and logic diagram illustrating operation of an algorithm for acquisition of automatic guidance upon entry of the crop vehicle into a field.

FIG. 8 is a block diagram of some functions of a microprocessor, represented symbolically by electronic hardware equipment that processes signals received from V-guide sensors for guiding the crop vehicle while it is operating in a field. Speed control is included.

### DESCRIPTION

### Vehicle and Crop Rows

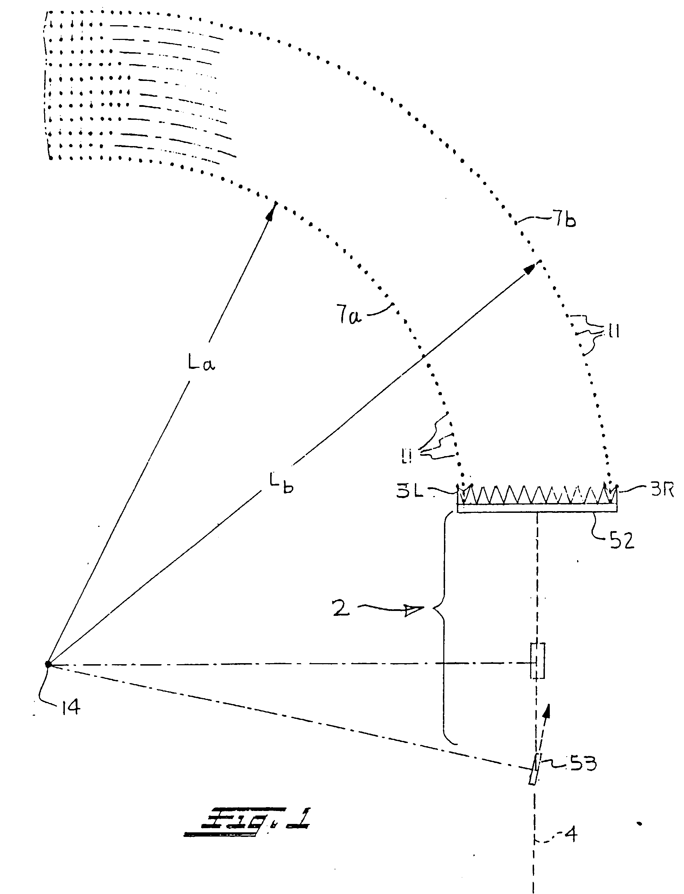

FIG. 1 shows a corn harvesting crop vehicle 2 traveling on an optimum path 4 toward twelve rows, 7a to 7b, of corn plants 11 extending from the left side 3L of the vehicle's harvesting attachment to its right side 3R. The rows are straight for a part of their path on the lower half of FIG. 1 and are curved to the left on the upper half of FIG. 1. The crop vehicle 2 has a steerable rear wheel 53 that is controlled by a hydraulic steering cylinder 56 (shown elsewhere). Although the centers of curvature of the left and right rows may not precisely coincide or be stationary, a point 14 is denoted as an approximate center of curvature of both. FIG. 1 also symbolically indicates a mechanism 52 which strips the ears of corn from the stalks when they arrive at it.

Various sensors and information-processing circuits are first described below, then the closed-loop control system in which they are utilized to control the vehicle is described.

### V-Guides and Sensors

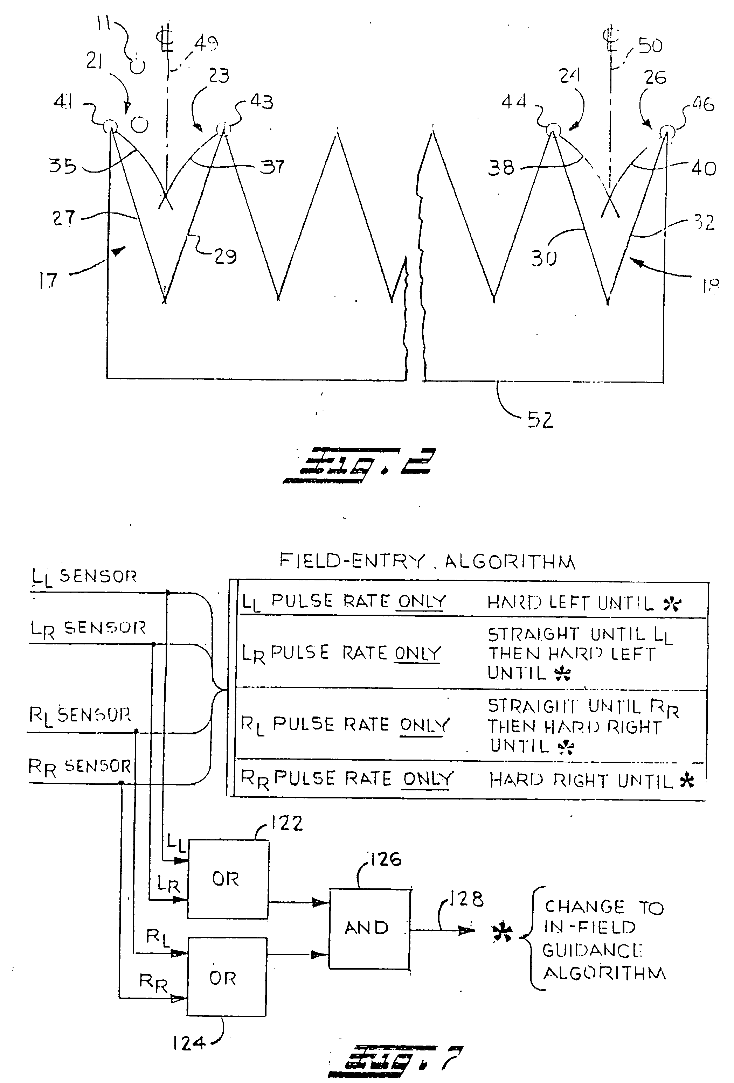

V-guides (one for each of the twelve rows), are parts of the header 52, as shown in FIGS. 1 and 2. The extreme left-hand and right-hand V-guides are numbered 17 and 18 respectively. FIG. 2 shows contact-type plant sensors 21, 23, which are provided on each leg 27, 29 of the extreme left V-guide 17; similar sensors 24, 26 are on the legs 30, 32 of the extreme right V-guide 18.

The plant sensors in this particular embodiment utilize spring-loaded potentiometers 41, 43, 44, 46 mounted on the left and right forward tips of the V-guides 17, 18.. A contact arm 35, 37, 38, 40 about 0.61 m (two feet) long extends from each potentiometer toward and past the centerline 49, 50 of its V-guide. The contact arms are slightly curved, pointed backward, and long enough that a pair of them forms a shallow X shape. When they encounter corn plants they are deflected backward, rotating the potentiometer shafts to which they are connected.

When a plant 11 deflects the contact-sensor arm 35, a change in resistance of the energized potentiometer 41 provides a signal indicating the presence and approximate relative lateral position of the plant 11. Deflection signals from potentiometers 41, 43, 44, 46 and related apparatus are denoted L_{L}, L_{R}, R_{L}, and R_{R} respectively.

### Signal Processing and Automatic Control

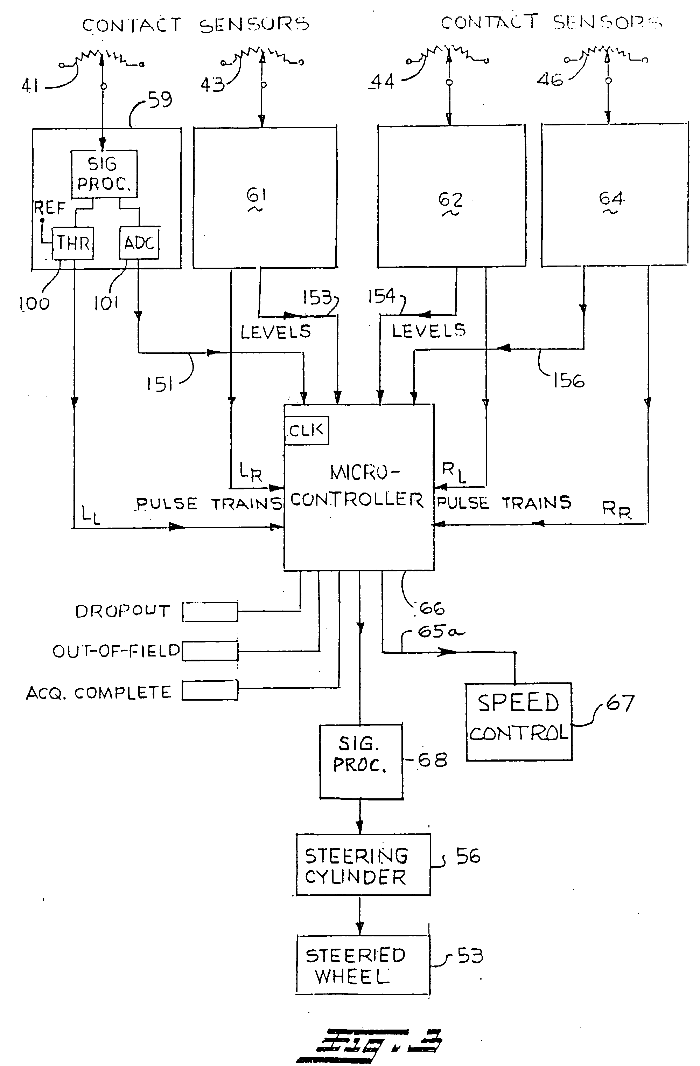

The potentiometer signals are processed by simple routine signal-processing circuits 59, 61, 62, 64 (FIG. 3), to make them acceptable as input data to a microcontroller 66. Within circuit 59, the deflection signal due to each plant is converted to a pulse of standardized amplitude and duration by a conventional threshold device 100, (which ignores low-level noise), and a pulse train L_{L} is output from circuit 59 to the microcontroller 66. Similarly, circuits 61, 62, and 64 send pulse trains L_{R}, R_{L}, and R_{R} to the microcontroller 66, which uses them for various purposes including missing-plant detection, initiation of automatic guidance upon entry of the vehicle into a field, etc., some of which are not described herein.

The peak amount or level of each deflection of a sensor is converted to a digital signal in an analog-to-digital converter such as ADC 101, and transmitted from circuits 59, 61, 62, 64 to microcontroller 66 on lines 151, 153, 154, and 156 respectively. The transmitted level data are referred to as L_{L}-level, L_{R}-level, R_{L}-level, and R_{R}-level.

The data are then processed and interpreted by the microcontroller 66. The microcontroller 66 includes a clock oscillator CLK that, together with a counter, enables it to ascertain the time between occurrences of plant-contact pulses.

One contact sensor alone, such as the sensor 21, would be able to sense a left or right deviation of the vehicle from an optimum path; the four contact sensors of this apparatus provide redundant lateral-position data that are combined in the microcontroller, preferably by averaging, but alternatively by selection in pairs, to improve steering accuracy. The four sensors also provide information about the frequency of plant contacts that is used in ways described below.

The microcontroller 66 outputs control commands to a circuit 68, which processes and amplifies them, and provides them to the steering cylinder 56 and its associated control equipment as in the prior art. In response, the steering cylinder 56 steers the wheels 53 in such a direction as to center the crop rows in the V-guides. The lateral error signals are thus reduced.

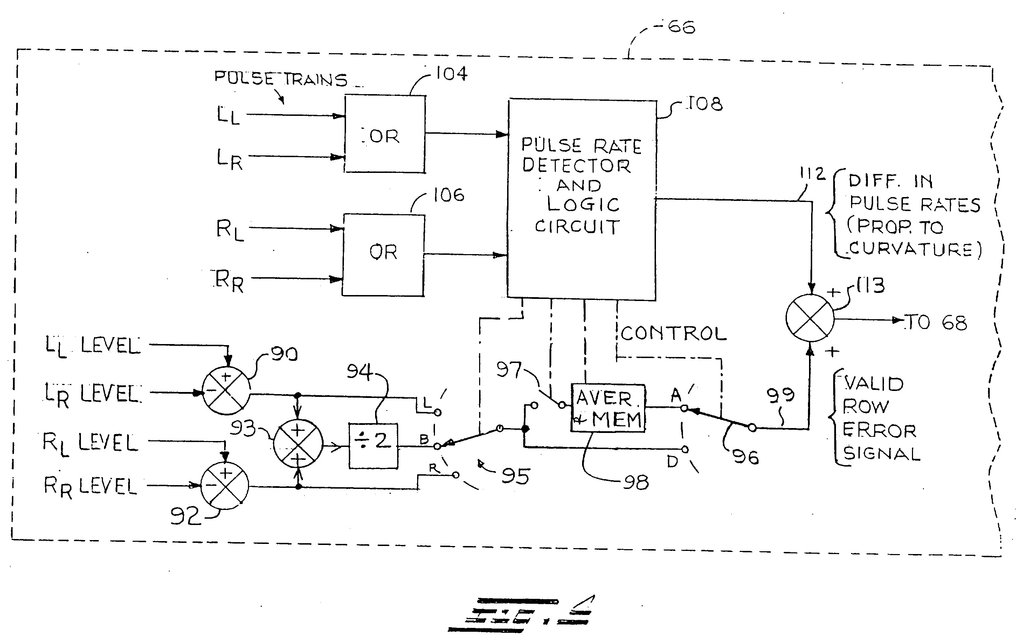

Each contact sensor such as sensor 21 is employed to obtain two types of information, (a) lateral position information, and (b) plant frequency information (FIG. 4), both of which will now be described in more detail.

### Lateral Position Information From The Contact Sensors

When the vehicle starts to diverge from the optimum path 4, the quantitative "level" signals from the V-guide's contact sensors 21, etc. provide lateral-position-error information.

FIG. 4 illustrates (in partially analog form for clarity), the relevant digital functions that are performed by the microcomputer 66 on this information. The difference between magnitudes of the L_{L} and L_{R} signal levels is taken at a subtractor 90, and the difference between magnitudes of the R_{L} and R_{R} signal levels is taken at a subtractor 92.

The two differences are averaged by adding them at 93 and dividing the sum by two at 94. Alternatively, one or the other of the differences can be selected, as indicated symbolically by a three-position switch 95 on FIG. 4. Switch position L has the left-hand difference level; position R has the right-hand difference level, and position B has both the left and right (average). The selector switch 95 is controlled by logic in the pulse rate detector 108 in dependence upon whether the left sensors or the right sensors or both are detecting plants and therefore producing pulse trains.

The selected level-signal difference at the output of switch 95 is connected directly to one pole D of a two-position "selector switch" 96, and is also passed through a single-pole switch 97 to a running-averaging shift register 98. The switch 97 is closed by action of pulse detector 108 whenever pulses are present at the left (104), the right (106), or both channels, as further described below. All of the logic functions of block 108 can be performed in any of several simple ways by routine programming of the microprocessor 66, using techniques that are well known in the prior art.

The pulse rate detector 108 also controls the averaging circuit and memory 98, which serves as a digital low-pass filter and memory. Block 98 constantly computes a running average of level signals, and stores and outputs its most recent running average. It is a shift register whose individual stage contents are averaged to provide a single output. When no plants are being encountered, the pulses from 104 and 106 stop altogether. The pulse detector 108 senses that, and operates the switch 96 to position A. That brings the averaging and memory device 98 into play, to output its stored recent-average information, which enables the automatic steering system to keep the harvester on a recent-average course.

Thus, under the control of the circuit 108, switch 96 selects the output of the register 98 (at the A position of switch 96) when all trains of pulses are absent, and selects the direct output of switch 95 (at the D position of switch 96) when any pulse train or trains whatsoever are being received by the detector 108.

The row-error signal at terminal 99, which is the output of switch 96, is indicative of the lateral deviation of the vehicle from the optimum path.

### Plant Frequency Information From The Contact Sensors

In FIGS. 3 and 4 the occurrence of any level of deflection signal above a noise threshold is interpreted as a plant-contact event by the threshold device 100. The presence of either a pulse signal L_{L} or a pulse signal L_{R} results in an event signal at the output of the OR logic device 104, which signifies that a plant of row 7a has been detected at the left-hand V-guide 17. Similarly, the arrival of the right-hand V-guide 18 at a plant in row 7b results in an event signal, namely a pulse, at the output of the OR gate 106. Successive plant contacts result in a pulse train, which is used by block 108 to ascertain which sensors are producing signals.

This information is also used to determine the frequency with which the contact sensors 21, etc. encounter plants, (which is readily determined from the times of their successive deflections). The frequency is proportional to the forward speed of the side of the vehicle on which the sensor is mounted. In this way the lineal velocities of the vehicle at both the right-hand and left-hand rows are sensed by the contact sensors (the frequency information) in the embodiment being described. The difference between the left-hand and right-hand frequencies, and the average of the left-hand and right-hand frequencies are taken in block 108, for control purposes described below.

### Averaging of Plant Spacings

Ordinarily corn is rather precisely positioned at its base during planting, but it may grow crookedly and therefore, at the height of the sensors 21, etc., be off-center by several centimeters (inches). This causes variations in the times of encountering them, and therefore variations in velocity data (spacing data). The number of plant spacings that must be averaged before their average spacing data is within a desired accuracy, for example, within 95 percent of the true base spacing, is the necessary sample size.

If the necessary sample size is, for example, ten spacings, then spacing values are loaded sequentially, in block 108, into a shift register having ten stages. If desired the plant spacings can be represented by the time intervals between plant encounters. The simultaneous data contents of the ten stages are added to provide an output signal proportional to the average of those ten spacings. When the next-occurring spacing value is entered, the oldest one is omitted, so the circuit outputs a running average of spacings.

Even when there are plant dropouts the averaging of plant spacing can be accomplished by the microcontroller 66 in any of several ways. In the preferred embodiment it loads the previous average value in lieu of a measurement, in the cycle in which the dropout occurs. The microcontroller 66 then computes a 10-space average as usual, and provides an output that enables the vehicle to be steered automatically through a dropout. A predetermined limit is imposed that discontinues the loading of average values when it is reached, and alerts the operator. Programming of the microcontroller 66 to accomplish this is routine.

### Plant Spacing At Turns

Ideally if the plants of the row being sensed by the left-hand sensors are 0.25 m (10 inches) apart, the plants of the row being sensed by the right-hand sensors would also be 0.25 m (10 inches) apart. Actually corn is often planted in banks (small groups) of rows, with the plant spacing cycle under the control of a ground-contacting wheel. The plants of all of the rows of one planting bank are planted in the same ground-contacting-wheel cycle even when the planting vehicle is on a turn. There might be several banks within the span of rows 7a to 7b of a 12-row harvester.

During harvesting, on a left turn the left-hand sensors encounters plants that were planted by a bank of row planters that was turning with a relatively small radius and the right-hand sensors encounters plants that were planted by a different bank of row planters, which was turning with a relatively larger radius (FIG. 1). The right side of the vehicle is traveling faster than the left, so the right-hand sensors encounter plants much more frequently than the left-hand sensors do. Although the frequency of encountering plants is only approximately proportion to turning radius, the measurement is accurate enough for the control purposes of this invention.

### Turning Feedback Signal

A frequency-difference signal is provided in 108, based on the difference in the velocities at the left- and right-hand sides of the vehicle. The rate of change of lateral offset error signal is not directly measured; instead, the difference in velocities of two spaced-apart points on the vehicle is measured. This indicates the actual rate of change of direction of the vehicle. The information is used by the microcontroller to provide a rate feedback signal that improves the steering of the vehicle.

The frequency-difference signal is provided in the following way. In FIG. 4, the rate of arrival of pulses received at the rate detector 108 from OR gate 106 is subtracted from the rate of arrival of pulses received at 108 from OR gate 104. The output 112 of block 108 is a pulse rate difference, which is roughly proportional to the curvature of the center row of the group of rows that the vehicle is harvesting, i.e., of the path 4. The curvature signal at terminal 112 from block 108 is injected as a turning rate signal into the steering servomechanism loop of FIG. 3 by simply adding it to the lateral offset error signal of terminal 99 in an adder 113, as shown on FIG. 4. The output signal of adder 113 therefore includes a turning-feedback component.

The feedback signal at 113a for controlling the steering also has a component obtained by integrating the lateral offset error, as described below in connection with integrator 110.

### Routine System Operation With Turning Feedback

It is on curved portions of the plant rows that the greatest deviations would occur if the V-guide's lateral position error signals alone were relied upon for automatic steering. At the top of FIG. 1 the rows of corn turn to the left. To follow the rows, the turning of the vehicle is started and controlled primarily by the lateral position error signals, and is assisted by a turning-feedback signal. When the vehicle is making this turn, its left side is traveling slower than its right side. As a first approximation, the angular velocity of the left side, reckoned about the instantaneous imaginary center 14, is taken to be approximately the same as the angular velocity of the right side, (point 14 is taken to be approximately on an imaginary line extended laterally through the sensors).

The lineal velocities of the left and right sides of the vehicle are approximately proportional to their respective turning radii La and Lb. The difference in frequencies of encountering plants on rows 7a and 7b indicates the rate of turning of the vehicle, and provides an additional curve-correction signal that improves the accuracy of tracking.

The frequency-difference apparatus provides almost immediate information about a turn of the vehicle, which quickly introduces a correction signal into the steering control system. No manual adjustment or other operator intervention is necessary.

Where the rows of corn are straight a difference in right-hand and left-hand plant frequencies is an early indication of a turning of the vehicle, which shortly thereafter could either cause a deviation from the optimum path 4 or correct a deviation by returning to the path 4. Thus the turning-rate signal assists the control system in tracking the plant rows accurately even when the rows are straight.

### Benefits of Turning Feedback When On Curved Rows

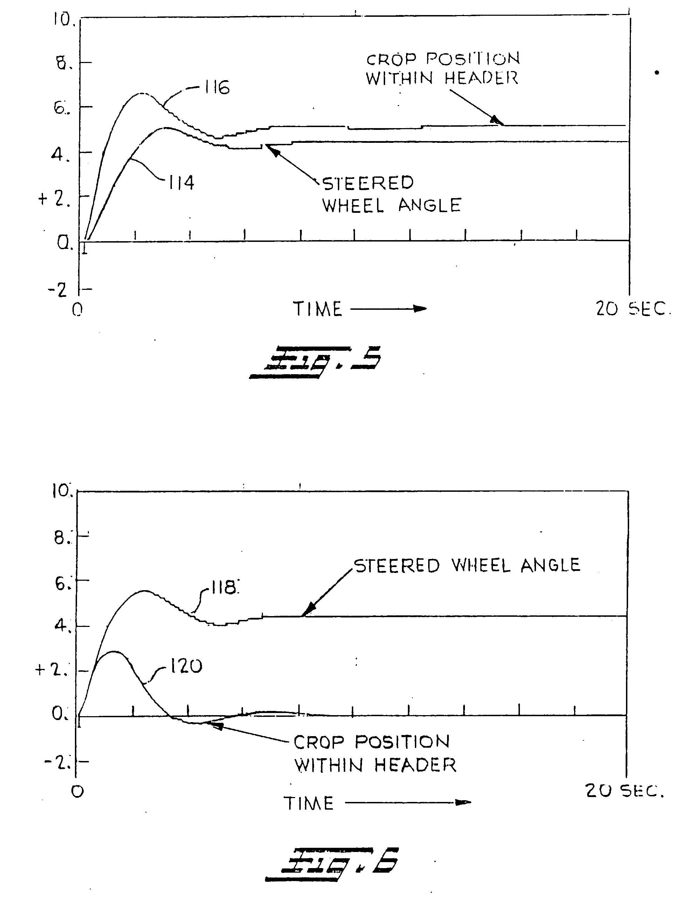

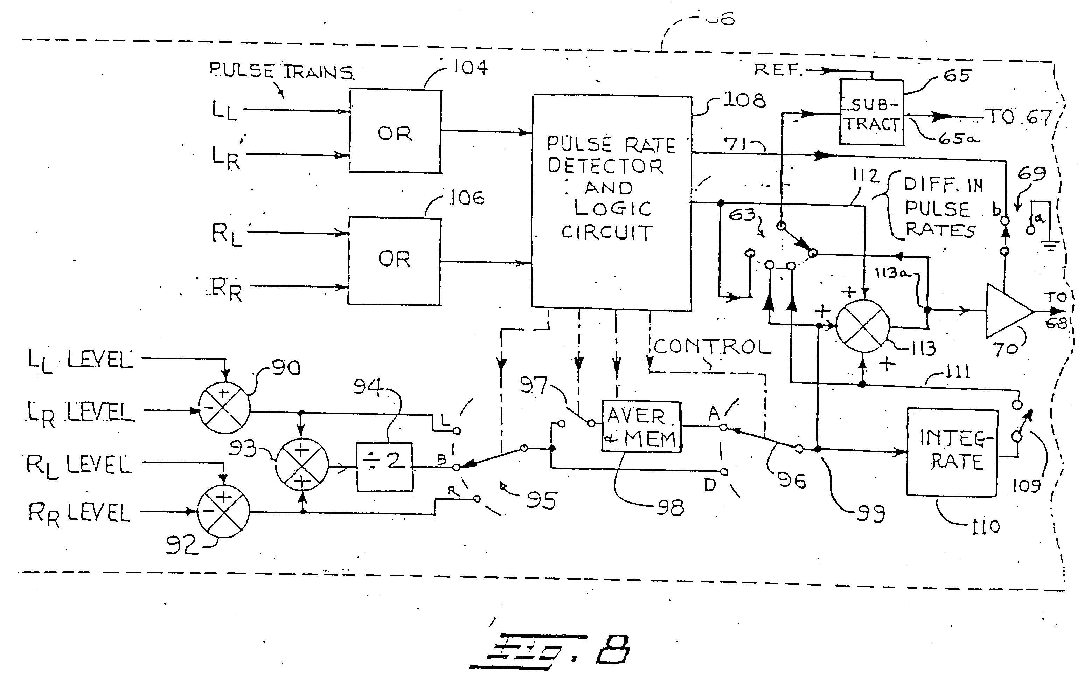

FIG. 5 and FIG. 6 are "before and after" curves showing a beneficial effect of the curve-correction capability. In FIG. 5 the angular position of the steered wheel 53 is plotted as a function of time, as curve 114. The FIG. 5 graph was obtained from a computer simulation of the guidance system, but without the invented curve-correction capability. The vehicle was assumed to be tracking along a straight segment of rows, and to arrive at time zero at a turn of the rows. The rows became off-center in the V-guides, producing error signals, and the steered wheel was automatically turned accordingly, to attempt to continue tracking the rows. The crop position within the V-guides is shown as curve 116. Note that in FIG. 5 the crop position became offset from zero (centered) and remained offset; this offset represents error, i.e., poor tracking. The gain of the feedback loop cannot be made great enough to enable the lateral offset error to be much smaller without incurring instability, without the curve-correction capability.

In FIG. 6 the curve-correction capability (based on turning-signal feedback) was provided in the guidance equipment. In this simulation, the vehicle was again traveling along a straight segment of rows, then encountered a curve at time zero. As before, the steered wheel 53 turned in response to lateral position error signals as shown in curve 118. The wheel 53 remained in the turned position throughout the turn.

The crop position within the V-guides is shown as curve 120 (FIG. 6). It exhibits a transient error when the turn starts, but returns to zero offset error after six seconds and remains at zero error throughout the turn. This is because (a) a turning signal was developed at the terminal 112 (FIG. 4), that was fed back to correct the crop position error, and (b) the turning signal made possible a higher stable gain in the feedback loop as a whole, so that negative feedback was able to reduce the error more vigorously.

Comparison of curves 116 and 120 relative to the zero level of the graphs shows the improvement due to the curve-correction capability of the invention.

### Summary of Enhanced Curve-Tracking Capability

To summarize, the invented system has improved tracking accuracy even where the crop rows are curved, because (a) there is an additional correction feedback signal and (b) the feedback loop's gain is more effective. There is a principal steering signal from the.lateral-position sensors on the V-guides; the turning signal is an additional, corrective, signal.

The "turning feedback" signal feeds back (through the control system) the rate of rotation of the vehicle about a displaced vertical axis. That signal is proportional to the difference between the lineal velocities of the right side and left side of the vehicle.

The loop gain can be made high without causing instability of the loop because the additional "turning feedback" signal stabilizes the loop. It enables the use of a lower loop gain for a given required steering accuracy, or greater accuracy for a given loop gain. With higher gain, the system tracks the rows with smaller error, because even a small lateral error signal is then amplified greatly to produce a large steering correction. Such great amplification would not be possible without the "turning feedback" signal, because the closed loop would not then be stable.

The output of the steering servo system as a whole can be thought of as the rotation rate of the vehicle or the rate of turning of the vehicle on its path, because the angular position of the steerable wheel is being controlled by the feedback system. In this invention, instead of relying solely on the lateral-error signal of the rows of plants with respect to the V-guide sensors to provide an error signal, the rate of rotation of the vehicle with respect to the crop, which is related to the rate of change of that lateral error, is also directly measured physically, and utilized to assist in controlling the steering.

Typical requirements are to be able to track down to a 50 meter radius, at 8 km/h (5 mph), with a 0.51 m (20-inch)-wide "window" for each row.

### Dropouts

An area where corn plants are absent, perhaps because they did not germinate properly, is called a "dropout". It is desirable that the crop vehicle be able to steer well automatically while it drives a distance of at least two meters where there is a dropout. The problem of sensing dropouts is facilitated by providing two overreaching contact sensors such as sensors 21, 23 at each V-guide 17, 18. The overlapping of their ends ensures that every plant within the span of a V-guide, irrespective of its lateral position therein, is sensed by at least one and sometimes two of the contact sensors.

If a signal is produced by only the left sensor 21 or the right sensor 23 of one V-guide 17, a plant is known to be present, but offset to the left or right of the V-guide's centerline 49. If the vehicle is accurately aligned with the rows of plants, signals are produced by both the left sensor 21 and the right sensor 23 of the left V-guide assembly 17, and by both sensors of the right V-guide assembly 18.

The fact that all of the corn plants are spaced about the same distance from other plants in the same row (in any one field) provides a priori information that a corn plant should be sensed at a given location, for example 0.25 m (10 inches)away from the previous one. By using this a priori information the system can if desired detect a drop-out of only one plant. The microcontroller 66 is programmed to do so by determining whether or not a plant was detected within a time interval (window) corresponding to a space interval where a plant would be expected to be found.

Programming of this type is easily done by those of ordinary programming skill. Preferably, the time interval window is generated by starting the window at a time one-half plant cycle after the most recent detection of a plant, and terminating the window one full cycle after it is started. The period of the plant cycle, i.e., the time between deflections, is stored in a shift register. Thus the windows are one period in duration, and out of phase with the deflection pulse train so as to have the pulses occur in the middle of the windows, as determined by the most recent history.

A second successive window starts when the first window ends. Deflection of a sensor during a window interval indicates the presence of a plant. If neither of the contact arms (e.g., 35, 37) of a V-guide is deflected within the predetermined time window, no plant is present. The number of contiguous dropouts is counted by the microcontroller 66. Overlapping of dropouts on the two sensed rows, and a threshold count for dropouts are also provided by the microcontroller, which actuates an alarm for the attention of the operator of the vehicle.

Even when there are dropouts the averaging of plant spacing can be accomplished by the microcontroller 66 in any of several ways. In the preferred embodiment it loads the previous average value in lieu of a measurement, in the cycle in which the dropout occurs. The microcontroller 66 then computes a 10-space average as usual, and provides an output that enables the vehicle to be steered automatically through a dropout. A predetermined limit on number of dropouts is imposed that discontinues the loading of average values when it is reached, and alerts the operator.

A double dropout can occur, i.e., corn can be absent at the same time from both the left-hand row 7a and the right-hand row 7b. If the crop vehicle is still in the field the probability is very small of long simultaneous dropouts of both rows. Occurrence of two meters or more of vehicle travel throughout which both rows are dropped out is interpreted by the microcontroller 66 to indicate that the vehicle is out of the field, and an "out-of-field alarm" is sounded.

Programming of the microcontroller 66 to accomplish this is routine. A signal indicating each dropout of plants on the left-hand row can be input to an AND function, and a signal indicating each dropout of plants on the right-hand row can be input to the same AND function. When the AND gate outputs a signal T times (cycles) in uninterrupted succession (where T corresponds to two meters of travel), the "out-of-field alarm is sounded.

### Vehicle Entering a Field

The subject guidance system has the capability of "acquiring" automatic control easily when the vehicle enters a field at speeds up to 4.8 km/h (three mph) at as much as a ten-degree angle relative to the direction of the rows. A field-entry algorithm is programmed into the microcomputer 66 for this purpose. FIG. 7 illustrates the functions of the microprocessor 66 in employing the field-entry algorithm. It uses the pulse trains L_{L}, etc. and not the level signals.

When no pulse train comes from any sensor for a predetermined number of seconds the field entry algorithm is enabled, i.e., is alerted to watch for a re-entry. Then, as shown on FIG. 7 and described below, when one sensor starts to produce a pulse train, the vehicle is steered into the field to place the vehicle in the in-field tracking mode of operation.

When the L_{L} sensor is the only sensor producing a pulse train, the vehicle is automatically steered sharply to the left until it enters the field, as indicated by an "acquisition complete" logic signal. When only the L_{R} sensor is producing a pulse train, the vehicle is automatically steered straight ahead until the L_{L} sensor also starts to produce a pulse train, at which time the vehicle is turned hard left until the "acquisition complete" logic signal occurs. Symmetrical algorithms apply for the right-hand sensors.

The conditions for completion of acquisition are shown by the logic diagram of FIG. 7. At least one sensor of the left row 7a must be producing a pulse train, as indicated by an output train from the OR gate 122, AND at least one sensor of the right row 7b must also be producing a pulse train within a predetermine time window, as indicated by an output train from the OR gate 124. An AND gate 126 combines the outputs of gates 122 and 124, and outputs the "acquisition-complete" logic signal at 128, which commands the system to change to the in-field mode of guidance control. If desired, instead the system can change to the in-field mode of guidance control when both (a) the completion signal occurs at terminal 128 AND (b) the steered wheel is essentially straight ahead, within a predetermined tolerance of thresholds.

### Parametric Information

A "header" is provided for storing variable parametric information describing the system, in a device that permits it to be conveniently plugged -into the control system. It preferably contains only crop-related information, e.g., plant spacing. If, during planting, the plant spacing is altered in some predetermined way at curves, their spacing pattern can be sensed by the V-guide frequency sensors during harvesting, and the data used to determine how sharply the rows are turning. It doesn't matter much whether the plants are planted at equal angular intervals on turns or at equal lineal spacings. With a priori information the relative rate of rotation can be derived from either of those two types of data, but it is simpler if the plants are at equal lineal spacings.

### Forward Transfer Function of the Steering System

The following is a simplified description of how the vehicle would be steered without the feedback of the subject invention. When the vehicle is traveling and the steerable rear wheels 53 are turned off center, the vehicle starts to rotate (relative to the earth) about a vertical axis near its front wheels, which act as a fulcrum. Also the vehicle as a whole starts traveling on an arcuate course about a center such as point 14 of FIG. 1.

The header device 52 is at the front of the vehicle, ahead of the front wheels. The lateral position of the header device 52 is the integral of the angular position of the steerable wheels 53. Consequently, after the steerable wheels are turned to a particular angle the vehicle must travel a distance before the effect of that turning manifests itself significantly as a lateral displacement of the header 52.

The relationship between the lateral displacement of the header 52 and the angular position of the steerable wheels 53 can be thought of as the forward transfer function of the vehicle. This vehicle forward transfer function introduces a substantial phase shift (lag) into the control system because the lateral displacement of the header 52 is proportional to an integration of the angular position of the steerable wheels 53, as stated above.

### Feedback Control

In the subject feedback control steering system the controlled variable is the lateral displacement of the header 52 from the crop rows. The objective is to maintain zero lateral displacement, which keeps the crop rows in the centers of their respective V-guides. Three negative feedback signals are utilized to close the servo loop.

The first of the three feedback signals is a proportional signal provided by the sensors 21 etc., which continually measure the lateral displacement of the header 52 relative to the crop rows. They provide the lateral displacement error signal (at terminal 99 of FIG. 4).

The second of the three feedback signals is an integral signal obtained by integrating the lateral displacement error signal (99). This is done in the integrator 110, which cumulatively builds up a corrective feedback signal at its output 111, FIG. 4. The integral feedback signal is intended to eliminate offset or steady-state error.

The integration signal that is provided at terminal 111 by the integrator 110 can be connected or disconnected from an input terminal of adder 113, as symbolized by a switch 109 of FIG. 4. When switch 109 is closed an integration term is provided in the feedback control loop. This integration component of feedback does not make the loop unstable, because the rate feedback signal at terminal 112 helps to maintain the stability of the system.

The third feedback signal is a derivative signal, which depends upon the turning of the vehicle relative to the crop rows. This signal indicates the angular velocity of the vehicle relative to the rows, and is provided at terminal 112 by the microprocessor 66. It helps to stabilize the system by compensating for the lagging phase shift that occurs in the forward transfer function of the vehicle.

In the embodiment being described the three feedback signals are added, as symbolized by the summing junction 113 of FIG. 4. Programming techniques for signal processing of this type in a digital computer such as the microcontroller 66 are well known and routine.

### Automatic Control of Loop Gain.

FIG. 8 is similar to FIG. 4 except that it shows an embodiment having speed-related control of loop gain and steering-error control of the vehicle's speed. The transfer function of the complete control loop includes the forward transfer function of the vehicular portion of the loop (see above). This is the portion between the steering angle at which the steerable wheels are turned, and the lateral offset of the V-guides from the crop rows. The gain of this forward transfer function is proportional to the speed of the vehicle. Without automatic gain control, when the vehicle's speed diminished, the gain of the forward transfer function would diminish, so the loop gain as a whole would diminish. If desired, the loop gain of the steering control system can be kept constant irrespective of the speed of the vehicle or can be controllably varied in response to the speed.

For this purpose, an automatic gain control (AGC) amplifier 70 is connected in the control loop to amplify the error signal from the adder 113 . An inverse speed signal that is inversely proportional to the vehicle's speed (within limits) is provided by the pulse rate detector 108 at a terminal 71. It can be connected to the AGC amplifier 70 by a switch 69, which is actuated when it is desired to maintain the loop gain constant irrespective of the vehicle's speed.

When switch 69' is moved from its grounded position-a to position b, it receives the signal 71 . The gain of the AGC amplifier 70 thereupon changes from a predetermined fixed gain to a variable gain that is automatically controlled by the signal 71 . The gain of amplifier 70 is inversely proportion to the vehicle's speed. When combined with the forward transfer function, which is directly proportional to speed, this makes the overall gain of the control loop constant, irrespective of the vehicle's speed.

If desired, the speed signal at 71 can easily be tailored (by offsetting and attenuating it), to cause the overall loop gain to increase or decrease in response to decreasing speed, instead of being maintained constant.

The AGC components just described are conventional, and can have their functions performed equally well by analog and digital circuits.

### Speed Change In Response To Steering Error Signal

FIG. 3 also shows a speed control device 67 in this embodiment, that can reduce the speed of the vehicle when the lateral position error signal or other steering error signal becomes large. The speed control 67 receives a control signal at a terminal 65a from the microcontroller 66. When the error signal of the automatic steering control system exceeds a predetermined threshold, the speed control 67 reduces the speed of the vehicle by an amount that depends upon the amount by which the error signal is excessive.

The switch 63 (FIG. 8), is provided to enable selection of any of several components of the error signal instead of the total error signal 113a. Signals other than the signal 113a that can be selected by the switch 63 to control the speed reduction include: the difference in plant pulse rates at terminal 112, the lateral level signal at terminal 99', and the integrated level signal that is output from the integrator 110

The nature of the control signal at 65a is made clear by FIG. 8. The error signal output from the adder 113 (at 113a), is connected via a switch 63 to a magnitude subtractor circuit 65 . In circuit 65 , the sign of the error signal is made positive and a predetermined reference voltage (REF) is subtracted from the magnitude of the error signal. The output at 65a of subtractor 65 is therefore the excess of the magnitude of the error signal over the reference voltage.

This output 65a determines the amount by which the speed of the vehicle is reduced by the speed control 67. Harvester vehicles of the prior art have speed reducers that reduce the vehicle's speed when a great torque load on the engine creates a risk of stalling. For example, when the component of engine load due to crop processing gets too heavy, the vehicle's speed is automatically reduced, reducing the traction and header components of engine load. This compensates for the heavy crop processing load and avoids stalling.

The speed control 67 can also be arranged to increase the speed of the vehicle when the error signal is very small. When performance of the header equipment is unusually high the harvester can be driven faster than usual, but continued fast driving would under all conditions would tire the operator. The speed control 67 increases productivity by assisting the driver.

### BREADTH

With appropriate modifications the invented system can of course be used as well for vehicles other than crop vehicles. It is also usable for various other types of crops. Although a microcontroller utilizing software is employed in the embodiments that are described, the invention can be practiced instead by means of analog or digital hardware without software.

## Claims

1. A guidance system that automatically steers a vehicle to track rows of spaced-apart plants, comprising:
means (35, 37, 38, 40) for sensing the lateral locations of the rows (7a, 7b) relative to the vehicle (2) and providing lateral information signals based thereon;
steering command means (66, 68) receiving said lateral information signals and providing steering command signals (113a) for steering the vehicle to follow a course tracking said rows; and
steering-actuator means (56) receiving said command signals, and responsive thereto for steering the vehicle;
**characterized by**
means (35, 37, 38, 40, 104, 106, 108) contacting the plants for sensing the angular rate of turning of the vehicle by utilizing the different frequencies of dectection of the rows of plants on the inside and outside of the curve, and for providing turning-rate feedback signals based thereon;
said steering command means (66, 68) additionally receiving said turning-rate feedback signals and responsive to both said lateral information signals and said turning-rate feedback signals providing said steering command signals.

2. A guidance system as in claim 1, wherein said means for sensing the lateral location of the rows and said means for sensing the angular rate of turning comprise first plant-contact sensor means (35, 37, 100, 101) arranged on the vehicle (2) to intercept a row (7a) of plants as the vehicle moves, for sensing the position of the row laterally relative to the vehicle and for providing a lateral error signal indicative of said position;
said first plant-contact sensor means comprising means (35, 37, 100) for sensing individual plants encountered on the row (7a) and for providing signals indicative of the rates of encountering the plants;
at least one additional plant-contact sensor means (38, 40, 100, 101) on the vehicle spaced apart laterally from said first plant-contact sensor means so that it intercepts a different row (7b) of plants, for sensing individual plants encountered on its row and for providing signals indicative of the rates of encountering plants; and
means (104, 106, 108) for producing said turning-rate feedback signal based on the difference between the rate at which plants are encountered by said first sensor and the rate at which plants are encountered by said additional sensor.

3. A guidance system as in claim 1, wherein said means for sensing the lateral locations of the rows comprise:
means (35, 37, 38, 40) for detecting the plants of each of two rows as the vehicle encounters them and for signaling occurences of the encounters;
means (66) for measuring indicia of the cyclic spacing between neighboring plants and providing data indicative of the spacing accordingly for each row;
means (66) for detecting that an absence of a plant has occured, including
means for establishing, based upon said spacing data, a time-interval window in which a plant would be detected if a plant were present;
means responsive to said means for detecting the plants and responsive to said time-interval window for ascertaining whether or not a plant was detected within that time-interval window and producing a signal indicative of plant presence or absence;
means (66) responsive to plant-absence signals for determining when simultaneous absences occur during overlapping cycles on both rows and for determining when the number of contiguous simultaneous-absences reaches a predetermined number and responsive thereupon to provide an alarm for the operator of the vehicle indicating that the vehicle may be out of the field.

4. A guidance system as in claim 3 and wherein said means (35, 37, 38, 40) for detecting the plants of a row as the vehicle encounters them comprises means contacted by the plants as the vehicle arrives at them and producing signals in response to being contacted.

5. A guidance system as defined in claim 3 and wherein said means (66) for establishing a time-interval window in which a plant would be detected if a plant were present comprises:
means receiving said spacing data and establishing the starting and stopping times of each such time-interval window so as to span the expected time of arrival of the next expected plant, based upon at least one recent actual encounter time.

6. A guidance system as in claim 1, wherein said means for sensing the lateral locations of the rows comprise:
means (35, 37, 38, 40) for detecting the plants of a row as the vehicle encounters them and for signaling occurences of the encounters;
means (66) for measuring indicia of the spacing between neighboring plants and providing data indicative of the spacing;
means (66) for ascertaining a running average of said spacing data for a predetermined number N of plants, wherein, when a new spacing datum is included in the average the oldest datum is dropped, and for outputting a value signal indicative of said N-fold running average of spacings;
means (66) for detecting that a dropout of a plant has occured, including;
means for establishing a time-interval window in which a plant would be detected if a plant were present;
means responsive to said means for detecting the plants and responsive to said time-interval window for ascertaining whether or not a plant was detected within said time-interval window;
means for loading a substitute value in lieu of a measured spacing datum when a dropout occurs;
means for counting contiguous occurences of such loadings of substitute values;
means for discontinuing the substitution process when the occurences reach a predetermined number M;
whereby said means for ascertaining a running average puts out a value signal even while the vehicle travels through a limited dropout, enabling the vehicle to be steered automatically through the dropout.

7. A guidance system as in claim 6 and wherein said means (35, 37, 38, 40) for detecting the plants of a row as the vehicle encounters them comprises means contacted by the plants as the vehicle arrives at them and producing signals in response to being contacted.

8. A guidance system as defined in claim 6 and wherein said means for establishing a time-interval window in which a plant would be detected if a plant were present comprises;
means receiving said spacing data and establishing the starting and stopping times respectively of each such time-interval window as being times preceding and following the expected time of arrival of the next expected plant, based upon at least one recent actual encounter time.

9. A guidance system as in claim 6 and wherein said means for loading a substitute value comprises means for storing and loading an average value of a plurality of previous values in lieu of a measured spacing datum when a dropout occurs.

10. A guidance system as in claim 6 and further comprising means responsive to said occurence-counting means for providing a dropout indication for the operator of the vehicle when a predetermined number of contiguous dropouts occurs.

11. A guidance system as in claim 1, further comprising
(A) means defining the lateral span of a left-hand sector of the vehicle (2) that extends across a left-hand row (7a) of plants as the vehicle moves to enter a field, said left-hand sector including within it a left-hand subsector and a right-hand subsector;
sensor means (35, 37) for sensing the arrival of a plant within said left-hand sector and left-hand subsector and for providing a signal L_{L} indicative of said arrival;
sensor means for sensing the arrival of a plant within said left-hand sector and right-hand subsector and for providing a signal L_{R} indicative of said arrival;
(B) means defining the lateral span of a right-hand sector of the vehicle that is spaced apart from said left-hand sector and that extends across a right-hand row (7b) of plants, said right-hand sector including within it a left-hand subsector and a right-hand subsector;
sensor means for sensing the arrival of a plant within said right-hand sector and left-hand subsector and for providing a signal R_{L} indicative of said arrival;
sensor means (38, 40) for sensing the arrival of a plant within said right-hand sector and right-hand subsector and for providing a single R_{R} indicative of said arrival;
(C) means for, when only said L_{L} signal is present, steering hard left until completion of acquisition is detected;
means for, when only said L_{R} signal is present, steering straight ahead until a L_{L} signal starts, then for steering hard left until completion of acquisition is detected;
means for, when only said R_{L} signal is present, steering straight ahead until a R_{R} signal starts, then for steering hard right until completion of acquisition is detected;
means for, when only said R_{R} signal is present, steering hard right until completion of acquisition is detected;
(D) means for detecting when acquisition is complete, comprising logic means for detecting when at least one of the L_{L} and L_{R} signals is present AND at least one of the R_{L} and R_{R} signals is present.

12. A guidance system as in claim 1, further comprising plant-contact sensor means (21) on the vehicle (2) for sensing plants that the sensor means encounter and for providing plant-indicating signals thereupon;
means (101) utilizing said plant-indicating signals for providing lateral-position signals indicating the lateral position of the plants relative to the vehicle;
means (100, 108) utilizing said plant-indicating signals for providing frequency-difference information signals regarding the difference between the frequency of encountering plants at the right row (7b) relative to that of the left row (7a), to ascertain the rate of change of the vehicle's heading;
means (113) receiving at least said lateral-position information signals and said frequency-difference information signals, and responsive thereto for providing said steering command signals.

13. A guidance system as in claim 1, further comprising;
plant sensor means (21) on the vehicle for sensing plants that are encountered and for providing a lateral-position feedback signal (99) indicating the lateral positions of the plants relative to the vehicle;
means (110) for integrating said lateral-position feedback signal and providing an integration feedback signal (111);
plant sensor means (108) providing signals based upon the difference between the frequency of encountering plants at the right row and the frequency of encountering plants at the left row for ascertaining the rate of change of the vehicle's heading and providing a feedback signal (112) accordingly;
means (113) receiving at least said lateral-position feedback signal (99) and said integration feedback signal (111) and said frequency-difference feedback signal (112), and responsive thereto for providing said steering command signals (113a);
steering-actuator means (68, 56) receiving said steering command signals and responsive thereto for orienting the steerable wheels (53) of the vehicle according to the steering command signals and thus steering the vehicle to track said rows.

14. A guidance system as in any one of the preceding claims, further comprising:
signal processing means (64) receiving said command signals (113a) for providing a speed-control signal (65a) related to the amount of the command signals (113a); and
speed-control means (67) receiving said speed-control signal and responsive thereto to assist in controlling the speed of the vehicle (2).

15. A guidance system as in any one of the preceding claims, further comprising:
means (108) for sensing the speed of the vehicle and producing a signal (71) dependent upon said speed; and
automatic gain control means (70) receiving said speed-dependent signal (71) for controlling the loop gain in response to the speed of the vehicle (2).

## Patentansprüche

1. Führungssystem, das ein Fahrzeug automatisch lenkt, um Reihen von in Abstand voneinander befindlichen Pflanzen zu folgen, mit:
einer Anordnung (35, 37, 38, 40) zum Erfassen der seitlichen Lage der Reihen (7a, 7b) mit Bezug auf das Fahrzeug (2) und zum Anliefern von darauf basierenden Seiteninformationssignalen;
einer Lenkbefehlsanordnung (66, 68), welche die Seiteninformationssignale aufnimmt und Lenkbefehlssignale (113a) bereitstellt, um das Fahrzeug so zu lenken, daß es einen den Reihen folgenden Kurs fährt; und einer Lenkbetätigungsanordnung (56), welche die Befehlssignale aufnimmt und entsprechend diesen das Fahrzeug lenkt;
**gekennzeichnet durch**
eine mit den Pflanzen in Kontakt kommende Anordnung (35, 37, 38, 40, 104, 106, 108) zum Erfassen der Winkelgeschwindigkeit der Drehung des Fahrzeugs durch Nutzung der verschiedenen Ermittlungsfrequenzen der Pflanzenreihen an der Innenseite und der Außenseite der Kurve und zum Bereitstellen von darauf beruhenden Drehgeschwindigkeits-Rückführsignalen;
wobei die Lenkbefehlsanordnung (66, 68) zusätzlich diese Drehgeschwindigkeits-Rückführsignale aufnimmt und in Abhängigkeit von sowohl den Seiteninformationssignalen als auch den Drehgeschwindigkeits-Rückführsignalen die Lenkbefehlssignale bereitstellt.

2. Führungssystem nach Anspruch 1, bei dem die Anordnung zum Erfassen der seitlichen Lage der Reihen und die Anordnung zum Erfassen der Winkelgeschwindigkeit der Drehung eine erste Pflanzenkontakt-Sensoranordnung (35, 37, 100, 101) aufweisen, welche eine Reihe (7a) von Pflanzen abfängt, während sich das Fahrzeug bewegt, um die Position der Reihe seitlich mit Bezug auf das Fahrzeug zu erfassen und um ein diese Position anzeigendes Seitenfehlersignal bereitzustellen;
wobei die erste Pflanzenkontakt-Sensoranordnung Mittel (35, 37, 100) zum Erfassen von einzelnen in der Reihe (7a) angetroffenen Pflanzen und zum Bereitstellen von Signalen aufweist, welche die Raten des Auftreffens auf Pflanzen anzeigen;
wobei auf dem Fahrzeug mindestens eine zusätzliche Pflanzenkontakt-Sensoranordnung (38, 40, 100, 101) vorgesehen ist, die sich seitlich in Abstand von der ersten Pflanzenkontakt-Sensoranordnung befindet, so daß sie eine andere Reihe (7b) von Pflanzen abfängt, um einzelne in dieser Reihe angetroffene Pflanzen zu erfassen und um Signale bereitzustellen, welche die Raten des Auftreffens auf Pflanzen anzeigen; und
wobei eine Anordnung (104, 106, 108) vorgesehen ist, welche das Drehgeschwindigkeits-Rückführsignal anhand der Differenz zwischen der Rate, mit der Pflanzen von dem ersten Sensor angetroffen werden, und der Rate, mit der Pflanzen von dem zusätzlichen Sensor angetroffen werden, erzeugt.

3. Führungssystem nach Anspruch 1, bei welchem die Anordnung zum Erfassen der seitlichen Lage der Reihen versehen ist mit:
einer Anordnung (35, 37, 38, 40) zum Ermitteln der Pflanzen jeder der beiden Reihen, wenn das Fahrzeug auf diese trifft, und zum Signalisieren des Auftretens des Auftreffens;
einer Anordnung (66) zum Messen von Kennwerten des zyklischen Abstands zwischen benachbarten Pflanzen und zum Bereitstellen von für den entsprechenden Abstand kennzeichnenden Daten für jede Reihe;
einer Anordnung (66) zum Ermitteln, daß eine Absenz einer Pflanze aufgetreten ist, mit
einer Anordnung, die anhand der Abstandsdaten ein Zeitintervallfenster vorgibt, innerhalb dessen eine Pflanze ermittelt würde, falls eine Pflanze vorhanden wäre;
einer auf die Anordnung zum Ermitteln der Pflanzen und auf das Zeitintervallfenster ansprechenden Anordnung, die bestimmt, ob innerhalb des Zeitintervallfensters eine Pflanze ermittelt wurde oder nicht, und die eine für das Vorhandensein oder die Absenz der Pflanze kennzeichnendes Signal erzeugt;
einer auf Pflanzen-Absenz-Signale ansprechenden Anordnung (66), die bestimmt, wenn gleichzeitige Absenzen während überlappender Zyklen in beiden Reihen auftreten, und die bestimmt, wenn die Anzahl von aufeinanderfolgenden gleichzeitigen Absenzen eine vorbestimmte Anzahl erreicht, und die darauf ansprechend für den Fahrer des Fahrzeugs einen Alarm bereitstellt, der anzeigt, daß das Fahrzeug sich möglicherweise außerhalb des Feldes befindet.

4. Führungssystem nach Anspruch 3, bei dem die Anordnung (35, 37, 38, 40) zum Ermitteln der Pflanzen einer Reihe, wenn das Fahrzeug auf diese trifft, eine Anordnung aufweist, die mit den Pflanzen in Kontakt kommt, wenn das Fahrzeug die Pflanzen erreicht, und die aufgrund eines solchen Kontakts Signale erzeugt.

5. Führungssystem nach Anspruch 3, bei dem die Anordnung (66) zur Vorgabe eines Zeitintervallfensters, innerhalb dessen eine Pflanze ermittelt würde, falls eine Pflanze vorhanden wäre, versehen ist mit:
einer Anordnung, welche die Abstandsdaten aufnimmt und die Start- und Stopzeiten für jedes Zeitintervallfenster basierend auf mindestens einer kurz vorhergehenden tatsächlichen Auftreffzeit so vorgibt, daß die erwartete Ankunftszeit der nächsten erwarteten Pflanze überspannt wird.

6. Führungssystem nach Anspruch 1, bei welchem die Anordnung zum Erfassen der seitlichen Lage der Reihen versehen ist mit:
einer Anordnung (35, 37, 38, 40) zum Ermitteln der Pflanzen einer Reihe, wenn das Fahrzeug auf diese trifft, und zum Signalisieren des Auftretens des Auftreffens;
einer Anordnung (66) zum Messen von Kennwerten des Abstandes zwischen benachbarten Pflanzen und zum Bereitstellen von für den Abstand kennzeichnenden Daten;
einer Anordnung (66) zum Bestimmen eines laufenden Mittelwertes der Abstandsdaten für eine vorbestimmte Anzahl N von Pflanzen, wobei dann, wenn eine neue Abstandsgröße in dem Mittelwert berücksichtigt wird, die älteste Größe fallengelassen wird, und zur Ausgabe eines Wertesignals, das kennzeichnend für den N-fachen laufenden Mittelwert der Abstände ist;
einer Anordnung (66) zum Ermitteln, daß eine Pflanze ausgefallen ist, mit:
einer Anordnung, die ein Zeitintervallfenster vorgibt, innerhalb dessen eine Pflanze ermittelt würde, falls eine Pflanze vorhanden wäre;
einer auf die Anordnung zum Ermitteln der Pflanzen und auf das Zeitintervallfenster ansprechenden Anordnung, die bestimmt, ob innerhalb des Zeitintervallfensters eine Pflanze ermittelt wurde oder nicht;
einer Anordnung zum Laden eines Ersatzwertes anstelle einer gemessenen Abstandsgröße, wenn ein Ausfall aufgetreten ist;
einer Anordnung zum Zählen von aufeinanderfolgenden Vorkommen von solchen Ersatzwertladungen;
einer Anordnung zum Unterbrechen des Substitutionsprozesses, wenn die Vorkommen eine vorbestimmte Anzahl M erreichen;
wobei die Anordnung zum Bestimmen eines laufenden Mittelwertes ein Wertesignal auch ausgibt, während das Fahrzeug einen begrenzten Ausfall überfährt, so daß das Fahrzeug durch den Ausfall automatisch hindurchgelenkt werden kann.

7. Führungssystem nach Anspruch 6, wobei die Anordnung (35, 37, 38, 40) zum Ermitteln der Pflanzen einer Reihe, wenn das Fahrzeug auf diese trifft, eine Anordnung aufweist, die mit den Pflanzen in Kontakt kommt, wenn das Fahrzeug die Pflanzen erreicht, und die aufgrund eines solchen Kontakts Signale erzeugt.

8. Führungssystem nach Anspruch 6, bei dem die Anordnung zur Vorgabe eines Zeitintervallfensters, innerhalb dessen eine Pflanze ermittelt würde, falls eine Pflanze vorhanden wäre, versehen ist mit:
einer Anordnung, welche die Abstandsdaten aufnimmt und die Start- und Stopzeiten für jedes solches Zeitintervallfenster basierend auf mindestens einer kurz vorhergehenden tatsächlichen Auftreffzeit als Zeiten vorgibt, welche der erwarteten Ankunftszeit der nächsten erwarteten Pflanze vorhergehen bzw. folgen.

9. Führungssystem nach Anspruch 6, bei dem die Anordnung zum Laden eines Ersatzwertes eine Anordnung zum Speichern und Laden eines Mittelwertes einer Mehrzahl von früheren Werten anstelle einer gemessenen Abstandsgröße bei Auftreten eines Ausfalls aufweist.

10. Führungssystem nach Anspruch 6 ferner versehen mit einer auf die Anordnung zum Zählen von Vorkommen ansprechenden Anordnung zum Bereitstellen einer Ausfallanzeige für den Fahrer des Fahrzeugs, wenn eine vorbestimmte Anzahl von aufeinanderfolgenden Ausfällen auftritt.

11. Führungssystem nach Anspruch 1 ferner versehen mit:
(A) einer Anordnung, welche die seitliche Ausdehnung eines linken Sektors des Fahrzeugs (2) definiert, der sich über eine linke Reihe (7a) von Pflanzen erstreckt, wenn das Fahrzeug in ein Feld hineinfährt, wobei der linke Sektor einen linken Teilsektor und einen rechten Teilsektor umfaßt;
einer Sensoranordnung (35, 37), welche das Eintreffen einer Pflanze innerhalb des linken Sektors und des linken Teilsektors erfaßt und ein dieses Eintreffen anzeigendes Signal L_{L} bereitstellt;
einer Sensoranordnung, welche das Eintreffen einer Pflanze innerhalb des linken Sektors und des rechten Teilsektors erfaßt und ein dieses Eintreffen anzeigendes Signal L_{R} bereitstellt;
(B) einer Anordnung, welche die seitliche Ausdehnung eines rechten Sektors des Fahrzeugs definiert, der in Abstand von dem linken Sektor liegt und der sich über eine rechte Reihe (7b) von Pflanzen erstreckt, wobei dieser rechte Sektor einen linken Teilsektor und einen rechten Teilsektor umfaßt;
einer Sensoranordnung, welche das Eintreffen einer Pflanze innerhalb des rechten Sektors und des linken Teilsektors erfaßt und ein dieses Eintreffen anzeigendes Signal R_{L} bereitstellt;
einer Sensoranordnung (38, 40), welche das Eintreffen einer Pflanze innerhalb des rechten Sektors und des rechten Teilsektors erfaßt und ein dieses Eintreffen anzeigendes Signal R_{R} bereitstellt;
(C) einer Anordnung, die, wenn nur das Signal L_{L} vorhanden ist, stark links lenkt, bis der Abschluß der Datenerfassung ermittelt wird;
einer Anordnung, die, wenn nur das Signal L_{R} vorhanden ist, geradeaus lenkt, bis ein L_{L}-Signal beginnt, und dann stark links lenkt, bis der Abschluß der Datenerfassung ermittelt wird;
einer Anordnung, die, wenn nur das Signal R_{L} vorhanden ist, geradeaus lenkt, bis ein R_{R}-Signal beginnt, und dann stark rechts lenkt, bis der Abschluß der Datenerfassung ermittelt wird;
einer Anordnung, die, wenn nur das Signal R_{R} vorhanden ist, stark rechts lenkt, bis der Abschluß der Datenerfassung ermittelt wird;
(D) einer Anordnung zum Ermitteln, wenn die Datenerfassung abgeschlossen ist, wobei diese Anordnung eine Logikanordnung aufweist, welche ermittelt, wenn mindestens eines der L_{L}- und L_{R}-Signale vorhanden ist und mindestens eines der R_{L}- und R_{R}-Signale vorhanden ist.

12. Führungssystem nach Anspruch 1 ferner versehen mit einer auf dem Fahrzeug (2) befindlichen Pflanzenkontakt-Sensoranordnung (21), die Pflanzen erfaßt, auf welche die Sensoranordnung trifft, und die daraufhin Pflanzenanzeigesignale bereitstellt;
einer Anordnung (101), welche die Pflanzenanzeigesignale nutzt, um Seitenpositionssignale anzuliefern, welche die seitliche Lage der Pflanzen mit Bezug auf das Fahrzeug anzeigen;
einer Anordnung (100, 108), welche die Pflanzenanzeigesignale für das Anliefern von Häufigkeitsdifferenzinformationssignalen bezüglich der Differenz zwischen der Häufigkeit des Antreffens von Pflanzen in der rechten Reihe (7b) mit Bezug auf diejenige von Pflanzen in der linken Reihe (7a) nutzt, um die Änderungsrate des Fahrzeugkurses zu bestimmen;
einer Anordnung (113), die mindestens die Seitenpositionsinformationssignale und die Häufigkeitsdifferenzinformationssignale aufnimmt und auf diese ansprechend die Lenkbefehlssignale liefert.

13. Führungssystem nach Anspruch 1 ferner versehen mit:
einer auf dem Fahrzeug befindlichen Pflanzensensoranordnung (21), die angetroffene Pflanzen erfaßt und ein Seitenpositionsrückführungssignal (99) anliefert, das die seitliche Position der Pflanzen mit Bezug auf das Fahrzeug anzeigt;
einer Anordnung (110) zum Integrieren des Seitenpositionsrückführungssignals und zum Anliefern eines Integrationsrückführungssignals (111);
einer Pflanzensensoranordnung (108), die Signale basierend auf der Differenz zwischen der Häufigkeit des Antreffens von Pflanzen in der rechten Reihe und der Häufigkeit des Antreffens von Pflanzen in der linken Reihe anliefert, um die Änderungsrate des Kurses des Fahrzeugs zu bestimmen und dementsprechend ein Rückführungssignal (112) anzuliefern;
einer Anordnung (113), die mindestens das Seitenpositionsrückführungssignal (99) und das Integrationsrückführungssignal (111) sowie das Häufigkeitsdifferenzrückführungssignal (112) aufnimmt und auf diese ansprechend die Lenkbefehlssignale (113a) liefert;
einer Lenkbetätigungsanordnung (68, 56), welche die Lenkbefehlssignale aufnimmt und darauf ansprechend die lenkbaren Räder (53) des Fahrzeugs entsprechend den Lenkbefehlssignalen ausrichtet und so das Fahrzeug derart lenkt, daß es den Reihen folgt.

14. Führungssystem nach einem der vorhergehenden Ansprüche, ferner versehen mit:
einer Signalverarbeitungsanordnung (64), welche die Befehlssignale (113a) aufnimmt und ein Geschwindigkeitssteuersignal (65a) liefert, das von dem Betrag der Befehlssignale (113a) abhängt; und
einer Geschwindigkeitssteueranordnung (67), welche das Geschwindigkeitssteuersignal aufnimmt und darauf ansprechend das Steuern der Geschwindigkeit des Fahrzeugs (2) unterstützt.

15. Führungssystem nach einem der vorhergehenden Ansprüche, ferner versehen mit:
einer Anordnung (108) zum Erfassen der Geschwindigkeit des Fahrzeugs und zum Erzeugen eines von dieser Geschwindigkeit abhängenden Signals (71); und
einer automatischen Verstärkungsregelungsanordnung (70), welche das geschwindigkeitsabhängige Signal (71) aufnimmt, um die Schleifenverstärkung in Abhängigkeit von der Geschwindigkeit des Fahrzeugs (2) zu steuern.

## Revendications

1. Système de guidage qui dirige automatiquement un véhicule pour suivre des rangées de plants espacées comprenant:
des moyens (35, 37, 38, 40), pour détecter les emplacements latéraux des rangées (7a, 7b) par rapport au véhicule (2), et délivrant des signaux d'information latérale sur la base de ceux-ci;
des moyens de commande de direction (66, 68),
recevant lesdits signaux d'information latérale, et délivrant des signaux de commande de direction (113a), pour diriger le véhicule pour suivre un trajet qui suit lesdites rangées; et
des moyens d'actionnement de direction (56), recevant lesdits signaux de commande, et sensibles à ceux-ci, pour diriger le véhicule;
caractérisé par
des moyens (35, 37, 38, 40, 104, 106, 108), venant en contact avec les plants pour détecter la vitesse angulaire de braquage du véhicule, en utilisant les différentes fréquences de détection des rangées de plants à l'intérieur et à l'extérieur de la courbe, et pour délivrer des signaux de contre-réaction de vitesse de braquage sur la base de celle-ci;
lesdits moyens de commande de direction (66, 68) recevant de plus lesdits signaux de contre-réaction de vitesse de braquage, et étant sensibles à la fois auxdits signaux d'information latérale et auxdits signaux de contre-réaction de braquage, pour délivrer lesdits signaux de commande de direction.

2. Système de guidage selon la revendication 1, dans lequel lesdits moyens pour détecter les emplacements latéraux des rangées et lesdits moyens pour détecter la vitesse angulaire de braquage comprennent des premiers moyens de détection de contact de plants (35, 37, 100, 101), agencés sur le véhicule (2), pour intercepter une rangée (7a) de plants pendant que le véhicule se déplace, pour détecter la position de la rangée, latéralement par rapport au véhicule, et pour délivrer un signal d'erreur latérale représentant ladite position;
lesdits premiers moyens de détection de contact de plants comprenant des moyens (35, 37, 100), pour détecter les plants individuels rencontrés sur la rangée (7a), et pour délivrer des signaux représentant les vitesses de rencontre des plants;
au moins des moyens de détection de contact de plants supplémentaires (38, 40, 100, 101) situés sur le véhicule, séparés latéralement desdits premiers moyens de détection de contact de plants, de façon qu'ils interceptent une rangée différente (7b) de plants, pour détecter les plants individuels rencontrés sur leur rangée, et pour délivrer des signaux représentant les vitesses de rencontre des plants; et
des moyens (104, 106, 108) pour produire ledit signal de contre-réaction de vitesse de braquage, sur la base de la différence entre la vitesse à laquelle les plants sont rencontrés par ledit premier détecteur, et la vitesse à laquelle les plants sont rencontrés par ledit détecteur supplémentaire.

3. Système de guidage selon la revendication 1, dans lequel lesdits moyens pour détecter les emplacements latéraux des rangées comprennent:
des moyens (35, 37, 38, 40), pour détecter les plants de chacune des deux rangées lorsque le véhicule les rencontre, et pour signaler les apparitions des rencontres;
des moyens (66), pour mesurer une indication de l'espacement cyclique entre plants voisins, et délivrant des données représentant en conséquence l'espacement pour chaque rangée ;
des moyens (66) pour détecter qu'une absence d'un plant a eu lieu, comportant
des moyens pour déterminer, sur la base desdites données d'espacement, une fenêtre d'intervalle de temps dans laquelle un plant est détecté si un plant est présent;
des moyens sensibles auxdits moyens pour détecter les plants, et sensibles à ladite fenêtre d'intervalle de temps pour s'assurer qu'un plan a été détecté ou non à l'intérieur de cette fenêtre d'intervalle de temps, et produisant un signal représentant la présence ou l'absence de plants;
des moyens (66) sensibles aux signaux d'absence de plant, pour déterminer le moment où se produisent des absences simultanées lors de cycles se recouvrant sur les deux rangées, et pour déterminer le moment où le nombre d'absences simultanées contiguës atteint un nombre prédéterminé, et sensibles à cela, afin de délivrer une alarme à l'opérateur du véhicule, indiquant que le véhicule peut être en dehors du champ.

4. Système de guidage selon la revendication 3, et dans lequel lesdits moyens (35, 37, 38, 40), pour détecter les plants d'une rangée lorsque le véhicule les rencontre, comprennent des moyens venant en contact avec les plants lorsque le véhicule y arrive, et produisant des signaux en réponse au fait qu'ils ont été touchés.

5. Système de guidage selon la revendication 3, dans lequel lesdits moyens (66) pour déterminer une fenêtre d'intervalle de temps dans laquelle un plant est détecté si un plant est présent comprennent :
des moyens recevant lesdites données d'espacement et déterminant les instants de début et de fin de chacune de ces fenêtres d'intervalle de temps, de façon à augmenter le temps d'arrivée attendu du plant suivant attendu, sur la base au moins d'un instant de rencontre réel récent.

6. Système de guidage selon la revendication 1, dans lequel lesdits moyens pour détecter l'emplacement latéral des rangées comprennent:
des moyens (35, 37, 38, 40), pour détecter les plants d'une rangée lorsque le véhicule les rencontre, et pour signaler les apparitions des rencontres;
des moyens (66), pour mesurer une indication de l'espacement entre plants voisins, et délivrant des données représentant l'espacement;
des moyens (66) pour s'assurer d'une moyenne glissante desdites données d'espacement pour un nombre de plants N prédéterminé, dans lesquels, lorsqu'une nouvelle donnée d'espacement est incluse dans la moyenne, la donnée la plus ancienne est abandonnée, et pour délivrer en sortie un signal de valeur indiquant ladite moyenne glissante de N plis d'espacements;
des moyens (66) pour détecter qu'une absence d'un plant a eu lieu, comportant
des moyens pour déterminer une fenêtre d'intervalle de temps dans laquelle un plant est détecté si un plant est présent;
des moyens sensibles auxdits moyens pour détecter les plants, et sensibles à ladite fenêtre d'intervalle de temps pour s'assurer qu'un plan a été détecté ou non à l'intérieur de ladite fenêtre d'intervalle de temps;
des moyens pour charger une valeur de substitution en remplacement d'une donnée d'espacement mesurée, lorsqu'une absence se produit;
des moyens pour compter les apparitions contiguës de ces chargements de valeurs de substitution;
des moyens pour interrompre le processus de substitution lorsque les apparitions atteignent un nombre prédéterminé M;
de façon que lesdits moyens pour s'assurer d'une moyenne glissante délivrent en sortie un signal de valeur, même pendant que le véhicule avance sur une absence limitée, permettant au véhicule d'être dirigé automatiquement à travers l'absence.

7. Système de guidage selon la revendication 6, et dans lequel lesdits moyens (35, 37, 38, 40), pour détecter les plants d'une rangée lorsque le véhicule les rencontre, comprennent des moyens venant en contact avec les plants lorsque le véhicule y arrive, et produisant des signaux en réponse au fait qu'ils ont été touchés.

8. Système de guidage selon la revendication 6, et dans lequel lesdits moyens pour déterminer une fenêtre d'intervalle de temps dans laquelle un plant est détecté si un plant est présent comprennent:
des moyens recevant lesdites données d'espacement et déterminant les instants de début et de fin de chacune de ces fenêtres d'intervalle de temps, comme étant des instants précédant et suivant le temps d'arrivée attendu du plant suivant attendu, sur la base au moins d'un instant de rencontre réel récent.

9. Système de guidage selon la revendication 6, et dans lequel lesdits moyens pour charger une valeur de substitution comprennent des moyens pour stocker et charger une valeur moyenne d'une pluralité de valeurs précédentes en remplacement d'une donnée d'espacement mesurée lorsqu'une absence se produit.

10. Système de guidage selon la revendication 6, et comprenant en outre des moyens sensibles auxdits moyens de comptage d'apparitions, pour délivrer une indication d'absence à l'opérateur du véhicule, lorsqu'un nombre prédéterminé d'absences contiguës apparaît.

11. Système de guidage selon la revendication 1, comprenant en outre:
(A) des moyens définissant l'étendue latérale d'un secteur de gauche du véhicule (2), qui s'étend d'un bout à l'autre d'une rangée de gauche (7a) de plants, pendant que le véhicule avance en entrant dans un champ, ledit secteur de gauche comportant à l'intérieur de celui-ci, un sous-secteur de gauche et un sous-secteur de droite;
des moyens détecteurs (35, 37), pour détecter l'arrivée d'un plant à l'intérieur desdits secteur de gauche et sous-secteur de gauche, et pour délivrer un signal L_{L} indiquant ladite arrivée;
des moyens détecteurs, pour détecter l'arrivée d'un plant à l'intérieur desdits secteur de gauche et sous-secteur de droite, et pour délivrer un signal L_{R} indiquant ladite arrivée;
(B) des moyens définissant l'étendue latérale d'un secteur de droite du véhicule, qui est séparé dudit secteur de gauche, et qui s'étend d'un bout à l'autre d'une rangée de droite (7b) de plants, ledit secteur de droite comportant à l'intérieur de celui-ci, un sous-secteur de gauche et un sous-secteur de droite;
des moyens détecteurs, pour détecter l'arrivée d'un plant à l'intérieur desdits secteur de droite et sous-secteur de gauche, et pour délivrer un signal R_{L} indiquant ladite arrivée;
des moyens détecteurs (38, 40), pour détecter l'arrivée d'un plant à l'intérieur desdits secteur de droite et sous-secteur de droite, et pour délivrer un signal R_{R} indiquant ladite arrivée;
(C) des moyens pour, lorsque seul ledit signal L_{L} est présent, diriger brusquement à gauche jusqu'à ce que l'achèvement de l'acquisition soit détecté;
des moyens pour, lorsque seul ledit signal L_{R} est présent, diriger tout droit jusqu'à ce qu'un signal L_{L} commence, puis pour diriger brusquement à gauche jusqu'à ce que l'achèvement de l'acquisition soit détecté;
des moyens pour, lorsque seul ledit signal R_{L} est présent, diriger tout droit jusqu'à ce qu'un signal R_{R} commence, puis pour diriger brusquement à droite jusqu'à ce que l'achèvement de l'acquisition soit détecté;
des moyens pour, lorsque seul ledit signal R_{R} est présent, diriger brusquement à droite jusqu'à ce que l'achèvement de l'acquisition soit détecté;
(D) des moyens pour détecter le moment où l'acquisition est terminée, comprenant des moyens logiques pour détecter le moment où au moins les signaux L_{L} et L_{R} sont présents ET où au moins l'un des signaux R_{L} et R_{R} est présent.

12. Système de guidage selon la revendication 1, comprenant en outre des moyens détecteurs de contact de plant (21) situés sur le véhicule (2), pour détecter les plants que rencontrent les moyens détecteurs, et pour délivrer ainsi des signaux indiquant les plants;
des moyens (101), utilisant lesdits signaux indiquant les plants, pour délivrer des signaux de position latérale indiquant la position latérale des plants par rapport au véhicule;
des moyens (100, 108), utilisant lesdits signaux indiquant les plants, pour délivrer des signaux d'information de différence de fréquence concernant la différence entre la fréquence de rencontre des plants sur la rangée de droite (7b) par rapport à celle de la rangée de gauche (7a), pour s'assurer de la vitesse de variation de l'entête du véhicule;
des moyens (113), recevant au moins lesdits signaux d'information de position latérale et lesdits signaux d'information de différence de fréquence, et sensibles à ceux-ci pour délivrer lesdits signaux de commande de direction.

13. Système de guidage selon la revendication 1, comprenant en outre:
des moyens détecteurs de plants (21) situés sur le véhicule, pour détecter les plants qui sont rencontrés, et pour délivrer un signal de contre-réaction de position latérale (99), indiquant les positions latérales des plants par rapport au véhicule;
des moyens (110) pour intégrer ledit signal de contre-réaction de position latérale, et délivrant un signal de contre-réaction d'intégration (111);
des moyens détecteurs de plants (108), délivrant des signaux sur la base de la différence entre la fréquence de rencontre des plants de la rangée de droite et la fréquence de rencontre des plants de la rangée de gauche, pour s'assurer de la vitesse de variation de l'en-tête du véhicule, et délivrant un signal de contre-réaction (112) en conséquence;
des moyens (113), recevant au moins ledit signal de contre-réaction de position latérale (99) et ledit signal de contre-réaction d'intégration (111) et ledit signal de contre-réaction de différence de fréquence (112), et sensibles à ceux-ci pour délivrer lesdits signaux de commande de direction (113a);
des moyens d'actionnement de direction (68, 56), recevant lesdits signaux de commande de direction, et sensibles à ceux-ci pour orienter les roues du véhicule pouvant être dirigées (53), en fonction des signaux de commande de direction, et dirigeant ainsi le véhicule pour suivre lesdites rangées.

14. Système de guidage selon l'une quelconque des revendications précédentes, comprenant en outre:
des moyens de traitement de signal (64), recevant lesdits signaux de commande (113a), pour délivrer un signal de commande de vitesse (65a) concernant la valeur des signaux de commande (113a); et
des moyens de commande de vitesse (67), recevant ledit signal de commande de vitesse et sensibles à celui-ci pour aider la commande de vitesse du véhicule (2).

15. Système de guidage selon l'une quelconque des revendications précédentes, comprenant en outre:
des moyens (108), pour détecter la vitesse du véhicule, et produisant un signal (71) dépendant de ladite vitesse; et
des moyens de commande automatique de gain (70), recevant ledit signal dépendant de la vitesse (71), pour commander le gain de boucle en réponse à la vitesse du véhicule (2).
